# EUROPEAN PATENT APPLICATION

(11) **EP 1 037 098 A1**
(43) Date of publication of application: **20.09.2000**
(21) Application number: 99200591.8
(22) Date of filing: 02.03.1999
(51) Int. Cl.: G03B 17/26

(54) **Method and apparatus for winding film around a spool**

(71) Applicant: Fuji Photo Film B.V., 5047 TK Tilburg (NL)
(72) Inventor: van de Pol, Wilhelmus Gertrudis, 5071 AP, Udenhout (NL)
(74) Representative: Ottevangers, Sietse Ulbe

(57) **Abstract**

Method for winding (36) film around a spool (35), whereby
- film (36) is fed, during a feeding phase, to insertion means by feeding means, comprising a feed motor,
- a first end of the film is inserted into the slot of a spool (35), during an insertion phase, by the insertion means comprising an insertion motor,
- the film (36) is wound on the spool, during a winding phase, using at least a spool motor,
   wherein
   - the speed of at least one of the motors is controlled by a voltage regulator such that the film is wound around the spool with an approximately constant film tension.

## Description

This invention relates to a method for winding film around a spool, according to the preamble of claim 1. Such method is known from EP 0 341 741. In this known method at spool is positioned on a spool holding shaft of a film winding pallet provided with a clutch brake unit. The spool is rotated by a force transmitted to the spool holding shaft from outside the pallet by a claw clutch device at the film winding pallet, driven by a spool motor. In this known method roll film is, during a feeding phase, fed to the spool by a feed motor and by an insertion motor for, during an insertion phase, inserting the forward end of the film into clamps of the spool. Next the film is wound around the spool, during a winding phase, whereby the spool is driven, as indicated above, by said spool motor. After completion of winding said film on said spool the film is released and the filled spool is removed and replaced by a next spool. To this end a number of spool holding shafts is positioned on a carousel.

In this known method during the feeding phase, insertion phase and winding phase the motors start almost instantaneously at their maximum speed and continue at that speed until the end of said phase. When the motors start at maximum speed the film speed will increase fast until the constant maximum speed is reached and maintained. At the end of the winding phase the film speed will reduce fast until zero, being cut off.

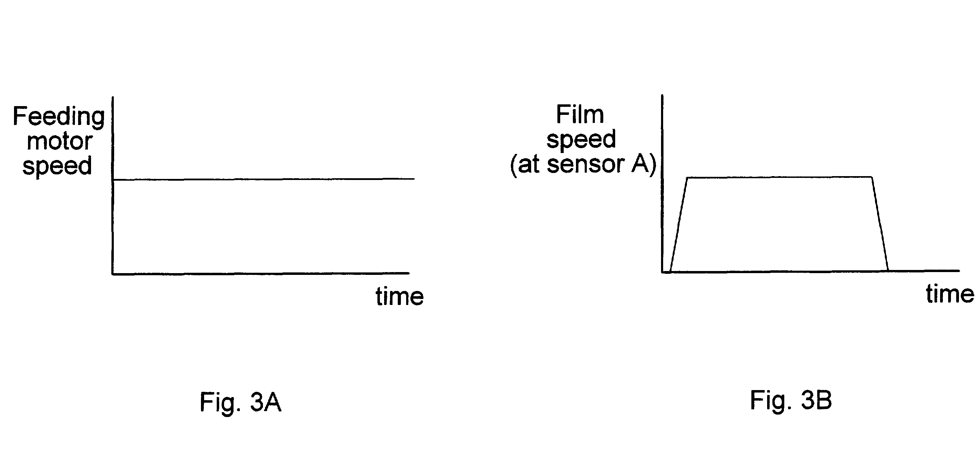

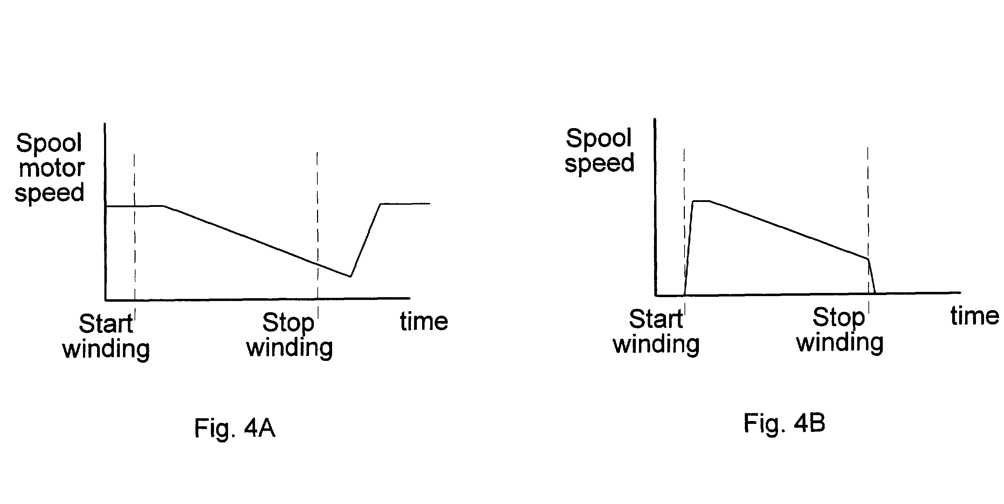

As the roll film is supplied at a constant rate by the feed motor and insertion motor, the angular velocity of the spool should be reduced as the diameter of the roll film around the spool is increased. This is necessary to achieve an approximately constant tension of the film during the whole winding phase. Before the start of the winding phase the spool motor will start at maximum speed, which is maintained for a short period and will then be decreased until the end of the winding phase. In order to start the winding cycle again with a next spool the spool motor speed is again increased until maximum speed is reached. The speed of the spool itself will increase rapidly until the maximum speed, which is maintained for a short period. The spool speed will then be reduced as the speed of the spool motor reduces. Since at the end of the winding operation the spool drive clutch is released the spool speed declines rapidly to zero. Clamp or plate coupling devices are provided between each of said motors and respective rollers and spool to be driven by said motors, braking means being provided for slowing down said rollers and spool. Drive patterns of an apparatus for this known method are presented in Figs. 3A, B and 4A, B.

This known method has the drawback that said coupling devices which are used for example for driving the spool holding shaft and rollers connected to the feed motor for feeding the film towards the spool, cannot follow instantaneously any start- and stop operations of the various motors. This results in excessive mechanical wear of the couplings which in return is detrimental to the needed instantaneous reaction of the plate couplings to the said start- and stop operations of said motors. As the winding performance of this method and apparatus depends strongly upon the condition of these plate couplings it will be clear that this winding performance will deteriorate strongly in time. Furthermore, the simulation of the required voltage for the feed motor, insertion motor and spool motor is not sufficient for simulating the real requirements for obtaining a film wound around the spool with approximately the same tension for the whole film length. This problem is further enhanced by the problem discussed here above of mechanical wear of the couplings and of said clutch brake units and said claw clutch device.

These problems result in relatively short lifetimes for the couplings used. This means that these couplings will have to be replaced frequently, which causes significant loss of production time. Furthermore, the mechanical wear problems result in decay of the standard conditions, which will result in a deviation of the winding tension of the film around the spool.

The present invention has as a main object to provide a method of feeding a film to, inserting said film into and winding said film around a spool in which the problems of the known method as discussed here above are prevented, whereas the advantages thereof are maintained.

A further object of the present invention is to provide a method for winding film around a spool, providing spools having film wound thereon with an approximately constant tension.

A still further object of the present invention is to provide a method for controlled feeding and inserting a film into a spool.

These and other objects of the present invention are reached by a method having the features according to claim 1.

Providing a voltage regulator for at least one of the motors, preferably for all of the motors provides the possibility of regulating the voltage and thus of the rotational speed of said motor, preferably each motor, such that at all times the optimal speed for the or each motor can be obtained. Furthermore, this provides the possibility of increase and/or decrease of the speed of the or each motor having a more appropriate pattern, whereby it will not be necessary to start the motors at their maximum speed and/or brake either motor to zero speed. Moreover, any coupling can be brought into engagement such that its speed can be increased to an operating speed such that wear of said coupling will be minimized, especially of any coupling plates and the like thereof, without any negative influence on the time necessary for winding said film.

In a preferred embodiment a method according to the present invention is characterized by the features of claim 2.

Use of a digital regulator as a voltage regulator for the or each said motor has the advantage that the performance of said motor can be simulated optimally, since digitalized value for the voltage of the or each said motor can be supplied at small intervals, for example of 4 milliseconds. By this method the voltage supply is not limited to a linear control but any periodicity can be programmed which simulates the best performance of said motor, for example the feed motor, insertion motor and/or winding motor. Servomotors will preferably be used for an optimal result. By digitally regulating the voltage and thus the speed of each of the motors normally the best results will be obtained.

In a first preferred embodiment a method according to the present invention is characterized by the features of claim 4.

Connection of the or each spool shaft to the spool motor by a spool clutch when film is to be wound on said spool provides the advantage that film can be wound on spools almost constantaneously, whereby full and empty spools can be exchanged easily on shafts which are not driven at the moment. Increasing the speed of the motor rapidly at the start of winding the film by increasing the voltage supplied thereto has the advantage that the clutch is engaged when the motor speed is relatively low and is increased rapidly with the increase of the motor speed. By decreasing the motor speed during winding of the film with decreasing deceleration the tension of the film can be kept approximately constant during winding of the film on said spool. Indeed, a slow decrease with decreasing deceleration of the rotational speed, appropriately matched to the increasing radius of the film wound on said spool can be obtained by a voltage regulator, preferably a digital regulator. Decrease of the motor speed happens relatively fast just before the end of the winding cycle of the film. Disengagement of the spool motor occurs by relatively low speed, the spool forming the load at that moment. The spool with the film wound thereon can then be easily inserted into for example a casing and/or be dismounted. Thus the wear of the clutch means and/or any brake means for said spool motor can be kept at a minimum whereas the winding performance can be optimized by these features.

In a further advantageous embodiment a method according to the present invention is characterized by the features of claim 5, preferably of claim 5 and 6.

Relatively slowly increasing the speed of the insertion motor at a start phase from a relatively low speed has the advantage that the respective clutches can be engaged at relatively low speeds. Furthermore, this has the advantage that the film can be accelerated smoothly at said start, whereafter the speed thereof can be increased relatively quickly by increasing the motor speed. During the insertion phase the speed of the insertion motor can then be kept relatively constant and high. At the end of the insertion phase the speed of the insertion motor can then be decreased relatively quickly to a constant winding speed, corresponding to the instantaneous speed of the corresponding spool motor. The smooth increase and decrease of the speed of the insertion motor and especially engagement and disengagement of the clutches at low speeds minimizes mechanical wear of the couplings positioned between the insertion motor and insertion rollers driving the film during the insertion phase, which rollers are driven by said insertion motor.

These advantages are especially reached by using voltage patterns, as disclosed in claim 10.

It will be clear to a person skilled in the art that the voltage patterns of the motors can be optimized by optimizing the voltage pattern of each motor in accordance with the voltage pattern of each of the other motors.

By minimizing the time interval between data voltage points for each regulator the voltage pattern for each of said motors can be regulated very smoothly. Time intervals of less than 100 msec, preferably less than 10 msec, and most preferably 4 msec or less are used.

The present invention further relates to an apparatus for winding roll film, characterized by the features of claim 15.

With an apparatus according to the present invention film can be wound on spools with an approximately constant film tension and without excessive wear to the parts of the apparatus, especially of any coupling means and/or breaking means thereof. This has the advantage that maintenance intervals can be relatively large which reduces loss of valuable production time as well as the use of spare parts.

In a preferred embodiment an apparatus according to the present invention is further characterized by the features of claim 17.

Sensor means for determining film and/or spool positions can be used for further optimizing the voltage supplied to each of the motors during operation, in order to further increase the performance of said apparatus.

Preferably at least three sensors are provided along the path of travel of each film. A first sensor is positioned directly behind the feed rollers, which is driven by the feed motor. A second sensor is positioned directly in front of the insertion rollers, which is driven by the insertion motor. A third sensor is positioned directly behind the spool, which is driven by the spool motor. During the feeding phase a film strip can be conveyed at relatively high speed which strip can be decelerated when the film strip is detected by said first sensor. The film motion can be brought to a full stop when detected by the second sensor, braked at low speed. Thus the film strip does not enter between the insertion rollers having a speed differing from the speed of said insertion rollers. This prevents damage to said film strip. Then the film strip can be forwarded to the spool by the feed rollers and insertion rollers, feeding the forward end through the spool, until this forward end is detected by the third sensor. The film strip can be forwarded to this position at high speed. Directly before said end reaches the third sensor the film speed is decelerated, such that said motors can be disengaged and the respective rollers can be braked at relatively low speed. During the winding phase the film strip is wound around the spool until the trailing end passes the second sensor. Then the spool is disengaged and the respective rollers and the spool shaft are braked.

Further advantageous embodiments of a method and apparatus according to the present invention are described in the dependent claims.

In further elucidation a method and apparatus according to the present invention are described here below, referring to the accompanying drawings. Thereon shows:
Fig. 1 part of an apparatus according to the present invention, in perspective view;
Fig. 2 a film winding part of an apparatus according to Fig. 1;
Fig. 3 a diagram of the feed motor speed and the film speed during the winding phase, in a method according to the prior art;
Fig. 4 a diagram of the spool motor speed and the spool speed during the winding phase in a method according to the prior art;
Fig. 5 schematically in side view of a relevant part of an apparatus according to the present invention;
Fig. 6 a diagram of the motor speed of the insertion motor during the winding phase in a method according to the present invention;
Fig. 7 a diagram of the spool motor speed during the winding phase in a method according to the present invention; and
Fig. 8 a diagram of the feed motor speed and the film speed during the winding phase in a method according to the present invention.

In this description corresponding parts will be designated corresponding reference signs. A method and apparatus according to the present invention will be discussed hereafter with reference to a method and apparatus as disclosed in EP 0,341,741 B1 of the same applicant, which publication is incorporated herein by reference. Only the relevant parts of the apparatus as disclosed therein will be discussed. It is emphasized here that also other apparatuses for winding film on spools can be used and provided with means for performing a method according to the present invention. The apparatus according to EP 0,341,741 is only disclosed by way of example.

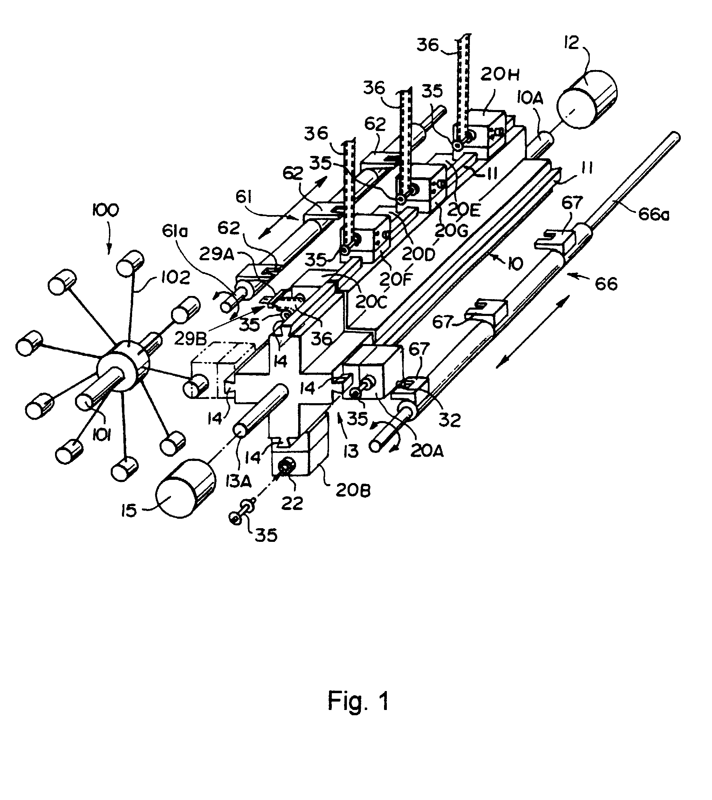

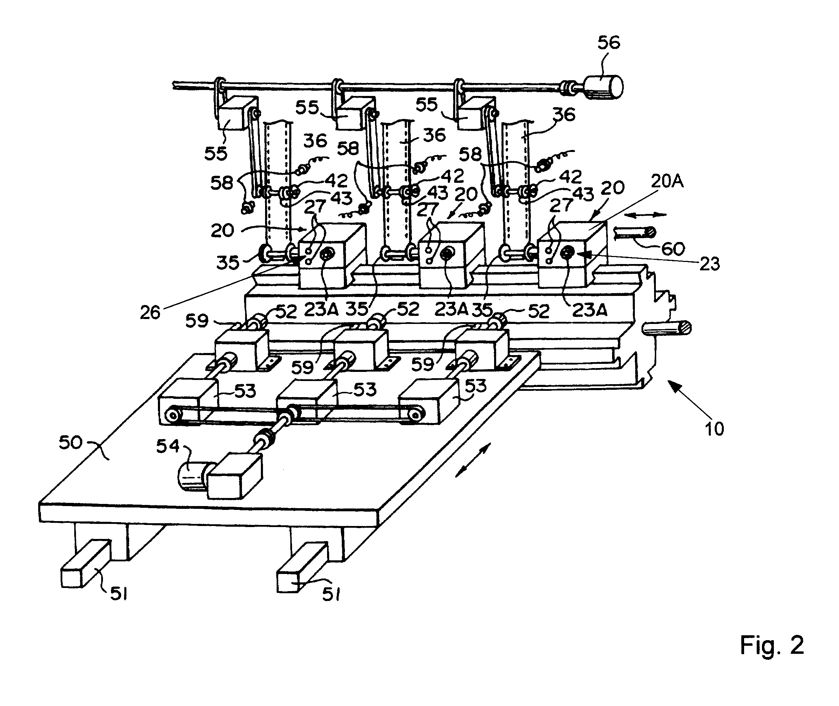

In Fig. 1 and 2, a first indexing means 10 is rotatable about a shaft 10A, and is provided with four guide rails 11 which are arranged at intervals of 90° about the shaft 10A and extend in parallel to the shaft 10A. The shaft 10A is connected to a first indexer driving means 12 and is intermittently rotated in the counter-clockwise direction by 90° at intervals of a predetermined time T₁. A second indexing means 13 is provided on the side of the first indexing means 10 opposite to the first indexer driving means 12 and is rotatable about a shaft 13A which is coaxial with the shaft 10A. The second indexing means 13 is provided with four guide rails 14 each of which is the same as the guide rail 11 of the first indexing means 10 in cross-sectional shape and adapted to be in alignment with one of the guide rails 11. The shaft 13A of the second indexing means 13 is connected to a second indexer driving means 15 and is intermittently rotated in the counter-clockwise direction by 90° at intervals of a predetermined time T₂ which is one third of the predetermined time T₁. That is, the first indexing means 10 is rotated once every time the second indexing means 13 is rotated three times, or the first indexing means 10 is rotated by 90° every time the second indexing means 13 is rotated by 270°.

A plurality of film winding pallets 20 (20A, 20B, 20C ...) are slid along the guide rails 11 and 14 in the longitudinal direction thereof in engagement with the guide rails. Reference numerals 20A, 20B, 20C and so on will either be used in order to denote the film winding pallets 20 per se or be used in order to denote the particular positions thereof. The film winding pallet 20 is provided with a spool holding shaft 22 which extends parallel to an engagement groove. The spool holding shaft 22 is connected, by way of a rotation transmission mechanism (not shown), to a rotation inputting shaft 23 which projects from a side of the film winding pallet 20A. The rotation inputting shaft 23 is provided with a claw clutch 23A on the outer end thereof. A pair of brake members extends from the side of the winding pallet 20A and are urged outward by springs 26. Each brake member 27 is connected to a brake pad (not shown) and normally presses it against the spool holding shaft 22 so as to restrain the rotation of spool holding shaft 22. When pushed inward by an external force, the brake member 27 removes the brake pad from the spool holding shaft 22 and permits the spool holding shaft 22 to rotate freely. A pair of film pinch arms is mounted on top of the winding pallet 20A. The film pinch arms are moved between an open position where they are positioned away from each other and a closure position above and in front of the spool holding shaft 22 where they abut against each other. The arms form a toggle mechanism and are held in the open position or the closed position under the force of a toggle spring. A hook roller which is used when the film winding pallet 20 is moved is provided in the vicinity of the arm opening and closing lever.

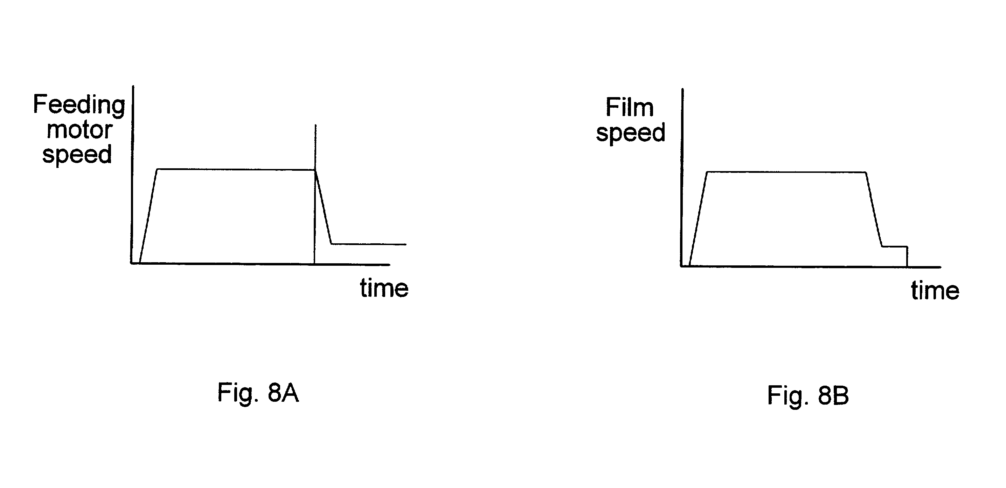

The film winding pallet 20 chucks the longer boss portion of a spool 35 for 35 mm film with the spool holding shaft 22A in a manner known per se. When a roll film is wound around the spool 35, three film winding pallets 20 with the spools 35 chucked are positioned on the uppermost one of the guide rails 11 of the first indexing means 10 as shown in Figure 1. At this time, the three film winding pallets 20 are spaced from each other by a predetermined distance and arranged in line so that the spool holding shafts 22 of the respective film winding pallets 20 are in alignment with each other, parallel to the rail 11. A roll film is into a filmstrip with a predetermined length which is fed to each of the three spools 35 and an end of the roll film is brought into engagement with the spool 35. The operation of the engaging the roll film with the spool 35 will be described, herein below, with special reference to figures 3-8.

A possible clamping and feeding mechanism is in more detail described in EP 0,341,741, incorporated herein by reference.

Figure 2 shows winding driving means which i.a. rotates the spools 35 in order to wind the film strips 36 around the spools 35. The winding driving means is largely omitted in Figure 1. A table 50 is moved along a pair of guide rails 51 to the side of the first indexing means 10 as shown in Figure 2. Three winding driving shafts 52 are located on the table 50. Each driving shaft 52 is connected to the output shaft of a servomotor 54 by way of a clutch-brake unit 53. Each driving shaft 52 has a claw clutch (not shown) on the free end face thereof and is opposed to the rotation inputting shaft 23 of one of the film winding pallets 20. When the table 50 is moved toward the first indexing means 10 over a predetermined distance, the claw clutch on the driving shaft 52 is brought into engagement with the claw clutch 23A on the rotation inputting shaft 23. At the same time, brake releasing members 59 push the brake members 27 of the respective film winding pallets 20 and release the spool holding shafts 22. Thereby, rotation of the servomotor 54 is transmitted to the spool holding shafts 22 and the spools 35 thereon are rotated, whereby the film strips 36 are wound around the spools 35. The film strips 36 are fed toward the spools 35 by the feed rollers 42 and 43. Each pair of feed rollers 42 and 43 is driven by a servomotor 56 by way of a clutch-brake unit 55. When the three film strips 36 are wound around the respective spools 35 in the manner described, and the leader portion of each film strips 36 is detected by a photoelectric sensor 58, the clutch-brake units 53 and 55 can interrupt transmission and brake the driven systems so that the leader portions of a predetermined length are kept unrolled.

While the leader portion of each roll film 36 is still held between the insertion rollers 42 and 43, the leader portion of the film strips 36 is pinched by pinch arms. Thereafter the table 50 is moved away from the first indexing means 10 to a predetermined waiting position. This causes the brake releasing members 59 to move away from the brake members 27, and the brake pads are pressed against the respective spool holding shafts 22. Accordingly, each spool 35 is prevented from being reversed under the resiliency of the film strips 36 so as to unroll the film strips 36.

After the film strips 36 are wound around the spools 35 and the leader portions of the film strips 36 are pinched by the film pinch arms 29A and 29B, the first indexer driving means 12 rotates the first indexing means 10 by 90°.

At this time the second indexing means 13 is also rotated by 90°. Accordingly, the three film winding pallets 20 which have been in the positions indicated at 20F, 20G and 20H in Figure 1 are moved to the positions indicated at 20C, 20D and 20E. Another three film winding pallets 20 have been positioned on the guide rail 11 which is in the uppermost position after the first indexing means 10 is thus rotated by 90°, and the film strips 36 are wound around the spools 35 held by another three film winding pallets 20 in the manner described above.

A magazine assembly system 100 is disposed beside the guide rails 14. When the film winding pallet 20 is moved to the position shown by the chained line, the spool 35 with the film strips 36 held by the film winding pallet 20 is moved into a magazine.

The or each spool 35, known per se, is correctly oriented with respect to the spool holding shaft 22A so that when the pallet is brought to the position 20F, 20G or 20H shown in Figure 1, the slit thereof opens upward with the engagement claws directed downwards so as to permit insertion of the film strip 36 into the slit and engagement of the engagement holes of the film strip 36 with the engagement claws 35B. When the spool 35 is oriented in this manner prior to the film winding step, the film winding step can be performed in a short time with high reliability.

As can be understood, the operations of delivering the pallet 20 carrying thereon the spool 35 with the roll film 36 to the second indexing means 13, loading the spool 35 with the film strip 36 into the film magazine, feeding the pallet 20 with another spool 35, and returning the pallet 20 with another spool to the first indexing means 10 are performed while the film strips 36 are wound around the three spools 35, at the same time.

Figure 3A shows a diagram in which the rotational speed of a feed motor is shown in relation to time, for a prior art method and apparatus as shown in EP 0,341,741, Figure 3B showing the film speed near the feed rollers driven by the feed motor, also of the prior art. As can be seen in the prior art the feed motor is started at its maximum speed, which speed is kept constant during the complete proceedings. As a result the film is accelerated from zero speed relatively quickly and with approximately constant acceleration to the maximum speed, which is maintained during a winding phase. At the end of the winding phase the film speed will be reduced fast with a constant deceleration until zero. The same diagrams can be drawn up for the insertion motor and related film speed of the prior art.

Figure 4A shows a diagram of the spool motor speed in the prior art, Figure 4B showing the spool speed as a result thereof, also of the prior art. As can be seen from Figure 4A the spool motor rotates at a constant maximum speed at the start of the winding phase, which maximum speed is maintained for a short period during the winding phase. The spool motor is then decelerated linearly, i.e. with a constant deceleration passed the end of the winding phase, to a minimum speed. The speed of the spool motor is then increased by a relatively high acceleration, back to its maximum speed for starting a new winding phase. This results in a very high acceleration of the spool at the start of each winding phase, as shown in Figure 4B, followed by a relatively short period in which the spool speed is at its maximum level. The spool speed is then decelerated together with the spool motor speed until the end of the winding phase, after which the spool speed is reduced to zero by a high deceleration.

In this method according to the prior art the loads on the clutch- and brake systems are very high, especially at the start and the end of the feeding phase (feed motor), insertion phase (insertion motor) and winding phase (spool motor) respectively. Furthermore, due to the drive pattern of especially the spool motor it is very difficult to maintain a constant tension in the film during the winding phase.

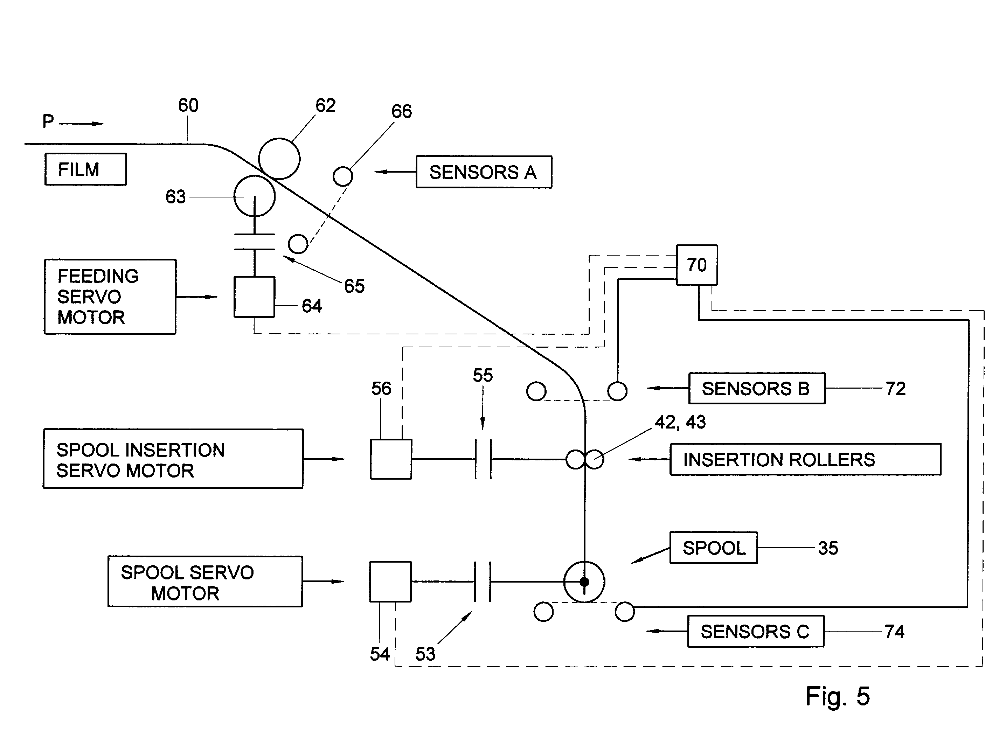

In Figure 5 the film feeding, insertion and winding part of an apparatus according to the present invention is shown schematically, in side view. A film 36 is fed with its forward end between two feeding rollers 62, 63, driven by a feed servomotor 64 when a clutch mechanism 65 is in engagement. The clutch mechanism is for example a claw- or plate clutch. Near the feeding rollers 62, 63 first sensors 66 are positioned which detects whether the film 36 passes between them. These data are fed into a central control unit 70 to be processed.

The film 36, driven by the feed rollers 62, 63 is guided in between second sensors 58, positioned on either side of the film track near insertion rollers 42, 43, in order to register the film 36 in between. These data are also fed into the control unit 70. The forward end of the film 36 is then positioned between the insertion rollers 42, 43, driven by an insertion servomotor when the coupling mechanism 55 is brought into engagement as discussed above. By the control unit 70 the rotational speed of the feed rollers 62 and 63 and the insertion rollers 42, 43 are controlled in a manner as will be discussed hereafter, in relation to each other.

The forward end of the film 36, which may be folded slightly in order to be stiffened, is inserted into the slit 35A of the spool 35, known per se, which opens upward. The forward end of the film 36 is engaged by suitable engagement means within said slit 35A, such that upon rotation of the spool 35 the film 36 will be wound around said spool 35.

The spool 35 is then driven by the spool servomotor 54, by bringing into engagement the brake and clutch mechanism 53 as discussed here above. A film strip is then wound around the spool, after which the spool, together with the film wound thereupon is inserted into a cassette. Near the spool 53 third sensors 74 are positioned which monitor the insertion of the film 36 into said spool 35. The third sensors 74 are also coupled to the control unit 70, as are the feed servomotor 64, the insertion servomotor 56 and the spool servomotor 54.

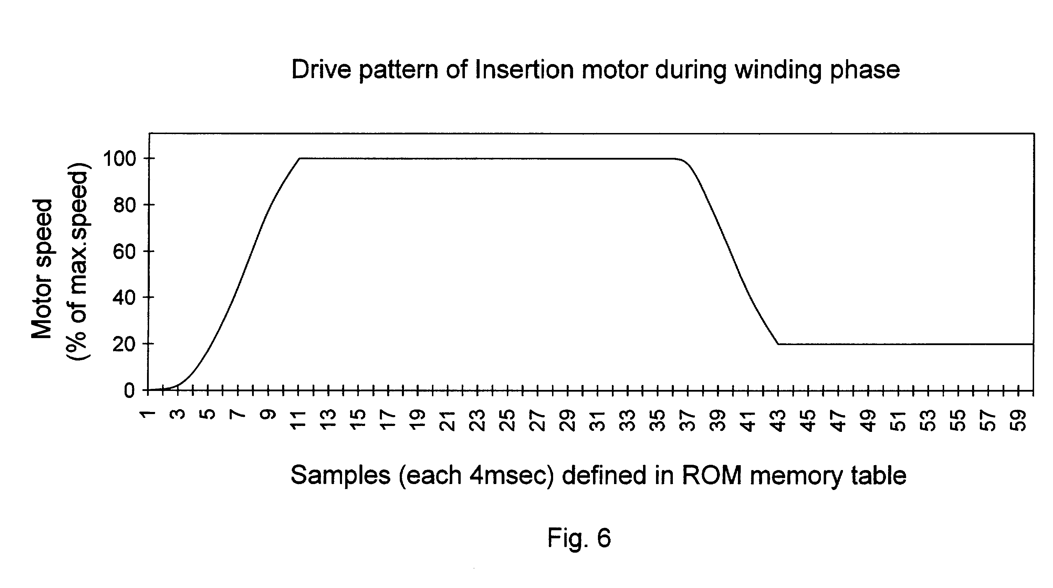

Figure 6 indicates a possible pattern of the motor speed in rounds per minute for the insertion servomotor during the winding process. A similar pattern can be drawn up for the speed of the feed servomotor 64 during said winding phase. In Figure 6 the rotational speed is given along the vertical axis of the diagram, time intervals of 4 msec each are given along the horizontal axis of the diagram. The diagram shows the second part of the winding process. In the first part the speed is reduced, such that the spool can be engaged without mechanical problems. A motor control unit comprises voltage regulators and means for using a digital data collection for the power supply of each of the motors 54, 56, 64, in which each data point represents the digitalized value of the voltage at each time interval of for example 4 msec. With a standard D/A converter the power setting of the voltage regulator for each servomotor can be provided at each time interval of 4 msec. By this method any periodicity can be programmed which simulates the best performance for the feed, insertion and winding servomotors, instead of being limited to a linear control as is available only in the prior art.

As is shown in Figure 6, the motor speed of the insertion servomotor, and thus of the insertion rollers 42, 43 and the coupling means 55 is gradually increased after the start of the winding method, whereby at first an increasing acceleration, followed by a decreasing acceleration is used for increasing said motor speed to a maximum motor speed.

The drive pattern of the motorspeed for the insertion servomotor during the insertion phase has a similar shape, as is shown in figure 6 for the insertion servomotor during the winding phase.

The maximum speed is then maintained during an insertion phase, which phase ends when the forward end of the film is inserted into said slit. The motor speed is then decreased at the end of said insertion phase relatively quickly to a constant, relatively low speed. A similar drive pattern will be used for the feed servomotor. The smooth increase and decrease of the speed of the insertion servomotor improves the performance of the apparatus. Mechanical wear troubles of the couplings 55, 65, the motors 56 and 64 and the rollers 42, 43 and 62, 63 is reduced significantly, while the quality of the insertion operation is also highly improved. The same or similar improvements are obtained with the power supply of the feed servomotor according to the present invention.

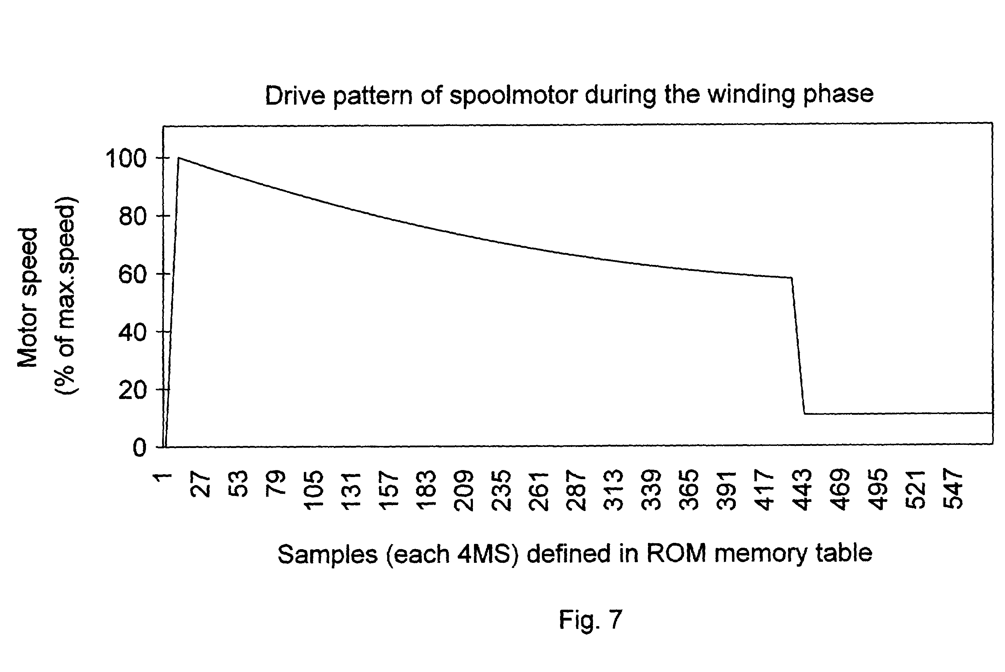

Figure 7 shows in a diagram the speed of the spool servomotor speed during and directly after the winding phase. Again the motor speed is indicated along the vertical axis in round per minute, the samples along the horizontal axis, each sample representing 4 msec.

As can be seen from Figure 7, the spool servomotor speed is increased from zero in an initial phase with constant, relatively high acceleration to a maximum speed. Said acceleration is chosen such that the spool servomotor and the spool can follow the voltage changes in a controlled manner. The spool motor speed is then gradually decreased to a minimum winding speed. The acceleration is relatively high at the start of winding of the film 36 onto the spool 35 and is decreased gradually, such that the spool speed is decreased in direct relation to the instantaneous radius of the outer layer of film wound onto said spool 35. Thus a constant tension is maintained in the film 36 during the complete winding phase.

As is clear from Figure 7, the curve indicating the deceleration of the spool motor during the winding phase is positioned below a straight line connecting the maximum motor speed and the minimum winding speed of the winding phase. This can be understood as non-linear regulation.

Directly before the end of the winding phase the spool servomotor speed is decreased very quickly with a deceleration factor comparable to the acceleration factor at the start of the winding phase, to a low and constant end speed. The spool, together with the film wound thereupon can be inserted into said cassette.

Due to use of voltage regulators for the digitalized power supply for preferably all of the motors 54, 56, 64, controlled by the central control unit, the drive patterns of the motors will be regulated very accurately with respect to each other. The speed setting for the motors with respect to each other is calculated on forehand and so programmed in a fixed table. Since the motorspeed will follow the speed setting appointed in this table, the motors can be controlled for every sample, preferably 4 msec in the table with respect to each other.

By using a digitalized power supply of which an example is described here above and since engagement and disengagement of the couplings and braking is achieved at relatively low speeds of there respective parts, the number of plate couplings and other mechanical parts which have to be repaired will diminish, thus reducing break down time of the apparatus considerably. Since exchange of plate couplings can take about two hours or more, during which the apparatus will have to be stopped, this is an important advantage.

Although a preferred embodiment has been described in which the drive speed, that is the voltage supply for each of the motors is regulated by a digitalized power supply it is also possible to only provide such supply for one or two of the motors, preferably for at least the spool servomotor, regulating the spool servomotor speed.

Furthermore, it is possible to modulate the drive speed of one or more of the motors 54, 56, 64 in a different manner with the same or comparable patterns. The feed servomotor and insertion servomotor could be combined into one motor connected to the insertion rollers 42, 43 and the feeding rollers 62, 63 by a coupling 55 and a coupling 65 respectively. Means can be provided by the central control unit to program different drive patterns or voltage supply patterns for the respective motors, depending on for example the chosen intervals, the film length to be wound onto a spool and the type of film to be wound.

Furthermore, during winding the spool could be driven with a constant speed, whereby during winding the speed of the insertion motor and/or the feed motor (when present) could be increased accordingly, for example up to their maximum speed as at the start of the feed and insertion phase.

In the embodiment described above three spools are provided with roll film at one time, and while the three spools are provided with the roll films, the spools which have been provided with the roll films in the preceding film winding operation are loaded into the film magazines, another three spools are fed to the pallets from which the spools with the roll film have removed and the pallets with another spool are returned. However, one, two or more than three spools may be provided with roll film at one time. Further, the system in accordance with the present invention may be arranged so that the operations described above are all performed serial. That is, the system may be arranged so that after the roll films 36 are wound around the spools 35, all the spools 35 are simultaneously sent to the next step, that is, all the spools are loaded into the film magazines at one time by the same number of indexing systems. In this case, the operation of exchanging the spools carrying thereon the roll films between two spool holding means such as pickup arms can be avoided. Further, the number of spools subjected to each step may be any number. Further, although in the embodiment described above the operation of feeding the film winding pallet 20 with another spool 35 and the operation of returning the pallet to the first indexing means 10 are performed in different positions, the latter operation may be performed immediately after the former operation is completed if these operations can be performed in a very short time as compared to the operation of winding the roll film around the spool. Further, the trailing end of the roll film may be fixed to the spool by use of adhesive tape or the like instead of the engagement claws 35B.

These and various other variations of a method and apparatus according to the present invention are considered to fall within the scope of the present invention as described in the following claims.

## Claims

1. Method for winding film around a spool, whereby
- film is fed, during a feeding phase, to insertion means by feeding means, comprising a feed motor,
- a first end of the film is inserted into the slot of a spool, during an insertion phase, by the insertion means comprising an insertion motor,
- the film is wound on the spool, during a winding phase, using at least a spool motor,
wherein
- the speed of at least one of the motors is controlled by a voltage regulator such that the film is wound around the spool with an approximately constant film tension.

2. Method according to claim 1, wherein for the or each regulator a digital regulator is used.

3. Method according to claim 1 or 2, wherein the speed of each motor is controlled by a digital voltage regulator.

4. Method according to any one of claims 1-3, wherein a number of spools is positioned on spool shafts, wherein the or each spool shaft is coupled to the spool motor by a spool clutch, wherein the speed of the spool motor is accelerated rapidly at the start of winding the film, whereafter the motor speed is decreased during winding of the film, with decreasing deceleration rate, whereby the motor speed is further decreased relatively fast just before ending winding of the film.

5. Method according to any one of claims 1-4, wherein the speed of the insertion motor is regulated such that in a start phase the speed is increased relatively slowly, after which the speed is relatively quickly increased to an insertion speed during an insertion phase, whereby the speed is, at the end of the insertion phase, decreased relatively quickly.

6. Method according to any one of claims 1-5, wherein the respective motors are during use coupled to feed rollers, insertion rollers and a spool shaft respectively by clutch means, wherein each of said clutch means are engaged and disengaged when the respective motor speeds is relatively low.

7. Method according to claim 6, wherein brake means are provided for each motor or the rollers or shaft to be driven thereby, wherein the brake means are engaged when the speed of said motor, rollers or shaft is relatively low.

8. Method according to any one of claims 1-7, wherein during each winding cycle the speed of at least the feed motor, the insertion motor or the spool motor is regulated non-linear during at least part of the winding cycle.

9. Method according to any one of the preceding claims, wherein a power supply pattern for each motor to be regulated is stored in a data storage system, whereby the motors are regulated according to said pattern stored.

10. Method according to any one of the preceding claims, wherein the voltage for the or each motor is provided at relatively small time intervals.

11. Method according to claim 10, wherein said intervals are less than 100 msec.

12. Method according to claim 11, wherein said intervals are less than 20 msec.

13. Method according to claim 12, wherein said intervals are less than 10 msec.

14. Method according to claim 13, wherein said intervals are less than 4 msec.

15. Apparatus for winding roll film on at least one spool, provided with
- film feed means, comprising a feed motor and first film drive means coupleable to the feed motor;
- film insertion means, comprising an insertion motor and second film drive means, coupleable to the insertion motor; and
- spool rotating means, comprising a spool motor and spool drive means, coupleable to the spool motor;
further provided with
- data storage means for storing data about a power supply pattern for at least one motor, preferably for each motor, and
- control means, comprising at least one voltage regulator for supplying, during use, a voltage to at least one of the motors according to said at least one relevant power supply pattern.

16. Apparatus according to claim 15, wherein the control means comprises at least one voltage regulator, using a D/A convertor and a digital data storing system.

17. Apparatus according to claim 15 or 16, wherein sensor means are supplied for determining at least film position during use.

18. Apparatus according to claim 17, wherein first sensor means are provided near the first film drive means, second sensor means are provided near the second film drive means and third sensor means are provided near the spool drive means.

19. Apparatus according to claim 18, wherein, seen in the direction of driving film, the first sensor means are positioned directly behind drive rollers of the first film drive means, the second sensor means are positioned directly in front of drive rollers of the second film drive means and the third sensor means are positioned directly behind, during use, a spool mounted on the spool drive means.
